(19) Europäisches Patentamt / European Patent Office / Office européen des brevets

(11) **EP 4 361 640 A1**

(12) **EUROPEAN PATENT APPLICATION**
published in accordance with Art. 153(4) EPC

(43) Date of publication:
**01.05.2024 Bulletin 2024/18**

(51) International Patent Classification (IPC):
***G01N 35/00*** *(2006.01)*

(21) Application number: **22828185.3**

(52) Cooperative Patent Classification (CPC):
**G01N 35/00**

(22) Date of filing: **02.06.2022**

(86) International application number:
**PCT/JP2022/022531**

(87) International publication number:
**WO 2022/270267 (29.12.2022 Gazette 2022/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.06.2021 JP 2021105544**

(71) Applicants:
- **HITACHI HIGH-TECH CORPORATION**
  **Tokyo 105-6409 (JP)**
- **Roche Diagnostics GmbH**
  **68305 Mannheim (DE)**
  Designated Contracting States:
  **DE**
- **F. Hoffmann-La Roche AG**
  **4070 Basel (CH)**
  Designated Contracting States:
  **AL AT BE BG CH CY CZ DK EE ES FI FR GB GR HR HU IE IS IT LI LT LU LV MC MK MT NL NO PL PT RO RS SE SI SK SM TR**

(72) Inventors:
- **SASAKI Shunsuke**
  **Tokyo 105-6409 (JP)**
- **IMAI Kenta**
  **Tokyo 105-6409 (JP)**
- **HADORN Maik Roger**
  **6343 Rotkreuz ZG (CH)**
- **KUEHNL Michael**
  **82377 Penzberg (DE)**
- **PUKAS Darius**
  **02-672 Warszawa (PL)**
- **BRZEZINSKI Mikolaj**
  **02-672 Warszawa (PL)**
- **MARCHEWA Janusz**
  **68305 Mannheim (DE)**

(74) Representative: **Strehl Schübel-Hopf & Partner**
**Maximilianstrasse 54**
**80538 München (DE)**

(54) **DIAGNOSIS SYSTEM, AUTOMATED ANALYSIS DEVICE, AND DIAGNOSTIC METHOD**

(57) To improve diagnostic accuracy of a sensor of an automatic analyzer.

A diagnostic system for diagnosing a sensor that is provided in an automatic analyzer and outputs an analog electrical signal includes a memory that stores data of the electrical signal output by the sensor and a replacement history of the sensor, and a processing device that processes data recorded in the memory, in which the processing device reads, from the memory, data for a set reference period from among electrical signal data output by a past sensor that was used in the automatic analyzer, calculates a statistical value of the data for a reference period, reads, from the memory, data recorded during a set evaluation period from among electrical signal data output by a sensor for diagnosis that is being used in the automatic analyzer, calculates a statistical value of the data for an evaluation period, and determines an abnormality of the sensor for diagnosis based on a difference obtained from the statistical value of the reference period and the statistical value of the evaluation period.

EP 4 361 640 A1

[FIG. 9]

```
                    ┌─────────────┐
                    │    START    │
                    └──────┬──────┘
                           │        S100
              ┌────────────▼────────────┐
              │  EXTRACT BASIC DATA GROUP │
              └────────────┬────────────┘
                           │        S110
               ┌───────────▼───────────┐
               │   EXTRACT VALID VALUE  │
               └───────────┬───────────┘
                           │        S120
            ┌──────────────▼──────────────┐
            │  CALCULATE AVERAGE VALUE     │
            │  AND STANDARD DEVIATION      │
            └──────────────┬──────────────┘
                           │        S130
               ┌───────────▼───────────┐
               │   CALCULATE Z SCORE    │
               └───────────┬───────────┘
                           │        S140
            ┌──────────────▼──────────────┐
            │  DETERMINE GROUP OF DATA     │
            │  FOR DETERMINATION           │
            └──────────────┬──────────────┘
                           │        S150
               ┌───────────▼───────────┐
               │   CALCULATE Z SCORE    │
               └───────────┬───────────┘
                           │        S160
               ┌───────────▼───────────┐
               │  TEST FIRST SIGNIFICANT │
               │  DIFFERENCE             │
               └───────────┬───────────┘
                           │        S170
               ┌───────────▼───────────┐
               │ TEST SECOND SIGNIFICANT │
               │ DIFFERENCE              │
               └───────────┬───────────┘
                           │        180
            ┌──────────────▼──────────────┐
            │  DETERMINE WHETHER           │
            │  REPLACEMENT IS NECESSARY    │
            └──────────────┬──────────────┘
                           │        S190
            ┌──────────────▼──────────────┐
            │ OUTPUT DETERMINATION RESULT  │
            └──────────────┬──────────────┘
                           │
                    ┌──────▼──────┐
                    │     END     │
                    └─────────────┘
```

**Description**

Technical Field

The present invention relates to a diagnostic system for diagnosing whether various sensors included in an automatic analyzer that measures trace components contained in a biological sample of blood, urine, or the like are normal or abnormal, an automatic analyzer incorporating the diagnostic system, and a diagnostic method.

Background Art

Generally, an automatic analyzer is configured from over a thousand parts. When a part suffers a failure, the faulty part needs to be quickly repaired or replaced in order to minimize downtime of the automatic analyzer. Further, the parts of the automatic analyzer include a plurality of kinds of parts that require themselves to be periodically replaced. It is also important to prevent downtime from occurring due to part failures by replacing such periodic replacement parts at suitable times.

Patent Document 1 discloses a technology in which an algorithm for predicting a failure is generated from data about the occurrence of failures of an automatic analyzer, and a failure such as damage of a part is predicted on the basis of data from at least one of calibration and quality control of the automatic analyzer according to the algorithm.

Prior Art Document

Patent Document

Patent Document 1: JP-2019-536049-A

Summary of the Invention

Problems to be Solved by the Invention

Generally, the sensors of automatic analyzers are designed with high sensitivity as they measure trace components in micromole/liter (pmol/L) or lower, and may have different response tendencies dependent on the circumstances. Diagnoses of the state of sensors for measuring such target components and various sensors involved in controlling operation of automatic analyzers and monitoring the state of various parts thereof remain to be improved for increased accuracy.

It is an object of the present invention to provide a diagnostic system, an automatic analyzer, and a diagnostic method that are capable of increasing the diagnostic accuracy for sensors of the automatic analyzer.

Means for Solving the Problems

In order to achieve the above object, there is provided in accordance with the present invention a diagnostic system for diagnosing a sensor that is provided in an automatic analyzer and outputs an analog electrical signal, the diagnostic system including a memory that stores data of the electrical signal output by the sensor and a replacement history of the sensor, and a processing device that processes data recorded in the memory, in which the processing device reads, from the memory, data for a set reference period from among electrical signal data output by a past sensor that was used in the automatic analyzer, calculates a statistical value of the data for the reference period, reads, from the memory, data recorded during a set evaluation period from among electrical signal data output by a sensor for diagnosis that is being used in the automatic analyzer, calculates a statistical value of the data for an evaluation period, and determines an abnormality of the sensor for diagnosis based on a difference obtained from the statistical value of the reference period and the statistical value of the evaluation period.

Advantages of the Invention

According to the present invention, the diagnostic accuracy for sensors of an automatic analyzer can be increased.

Brief Description of Drawings

FIG. 1 is a plan view schematically illustrating a configuration example of an automatic analyzer to which a diagnostic system according to a first embodiment of the present invention is applied.

FIG. 2 is a schematic diagram of a sensor used for measuring a sample in the automatic analyzer illustrated in FIG. 1.

FIG. 3 is a block diagram illustrating a data processing flow in the automatic analyzer illustrated in FIG. 1.

FIG. 4 is a diagram illustrating an example of time-series data of emission intensity measured at the time of sample measurement.

FIG. 5 is a diagram illustrating an example of time series data of voltage values measured at the time of sample measurement.

FIG. 6 is a diagram illustrating an example of time series data of current values measured at the time of sample measurement.

FIG. 7 is a diagram illustrating an example of time-series data of resistance values measured at the time of sample measurement.

FIG. 8 is a block diagram illustrating a sensor diagnosis processing flow in a server.

FIG. 9 is a flowchart illustrating a detailed procedure of a determination calculation process and a replacement need determination process in the flow of FIG. 8.

FIG. 10 is a flowchart illustrating a detailed procedure for extracting a basic data group in the flow of FIG. 9.

FIG. 11 is a conceptual diagram illustrating a setting of a reference period.

FIG. 12 is a diagram illustrating an example of a setting screen of a determination condition of a sensor for diagnosis.

FIG. 13 is a block diagram illustrating a data processing flow in a diagnostic system according to a second embodiment of the present invention

Modes for Carrying Out the Invention

1. Definition of main terms

"Sensor for diagnosis"

In the present description, a sensor that is currently used in an automatic analyzer and that is to be diagnosed as normal or abnormal will be referred to as a sensor for diagnosis. Sensors for diagnosis include all sensors that are incorporated in automatic analyzers and that exhibit electric behaviors. Specifically, apart from sensors for measuring measurement items, e.g., the concentration of a target component, sensors involved in controlling operation of an automatic analyzer and sensors used to monitor the state of various parts of the automatic analyzer are also examples of sensor for diagnosis. Therefore, a pressure sensor installed in a fluid channel and used for checking the state of the fluid channel with a voltage is also classified as a sensor for diagnosis. In addition, a pressure sensor used to check the liquid delivery pressure of a liquid delivery pump by converting the liquid delivery pressure into an electrical signal, and an impedance meter used to check the agitation intensity of an agitating mechanism with an impedance are also examples of sensor for diagnosis.

"Past Sensor"

A sensor that was used in an automatic analyzer and already removed from the automatic analyzer so as to be replaced will be referred to as a past sensor. Past sensors include sensors used in the past in an automatic analyzer where a sensor for diagnosis is used, and may include sensors used in the past in an automatic analyzer different from an automatic analyzer where a sensor for diagnosis is used. In other words, data from sensors used in other automatic analyzers can be a basis for indices for failure diagnosis.

"Reference period"

A set reference period in which a past sensor is presumed to be in a normal state will be referred to as a reference period.

"Reference sample"

A sample, such as a standard sample (calibration sample), a QC sample (quality control sample), or a dummy sample to be measured by an automatic analyzer prior to the measurement of a patient's sample will be referred to as a reference sample. A sample described as a reference sample includes at least one kind (a kind or a plurality of kinds) of a standard sample, a QC sample, and a dummy sample. A standard sample is a prepared sample to be measured for creating a calibration curve for calibration. A QC sample is a prepared sample to be measured for QC (quality control).

A dummy sample is a predetermined sample to be measured in a preparatory process prior to the measurement of a patient's sample. Any of standard samples, QC samples, dummy samples, etc. are produced in lots, and a plurality of them belonging to one lot are successively measured by one sensor of an automatic analyzer.

2. Mode for implementing the invention

According to the present implementing mode, the statistics of data of analog electrical signals output from sensors used in the past in an automatic analyzer are collected and used as indices for diagnosing sensors that are in current use. The sensors to be diagnosed are various sensors used to measure analysis items of biological samples with a biochemical analyzer, an immune analyzer, blood coagulation time measuring instrument, an ISE measuring instrument, or the like, and may be a flow-cell-type sensor having ion selectivity electrodes, for example. Analog electrical signals output from sensors include not only a measured value of an analysis item of a sample (the concentration of an analytic target component), but also a response value such as a resistance value or a current value that is developed by a sensor electrode when a control voltage is applied to the sensor electrode, for example. If a controlled target is not a voltage, but a current or a resistor, then a voltage value measured in response to the current or the resistor also represents an electrical signal output from a sensor.

The diagnosis described above may be manually performed by a process including manual calculations on the basis of data output from sensors. However, the diagnosis may also be implemented by a function of a computer including a memory (a storage medium such as R_AM, ROM, HDD, and SSD), and a processor (CPU, etc.). The function may be performed by a computer incorporated in the automatic analyzer or directly connected by a cable to the automatic analyzer. The function may alternatively be performed by a computer (a server or the like) connected for communication to a computer of the automatic analyzer via a global network or a local area network.

In case where a computer is used, an analog electrical signal output from a sensor of the automatic analyzer is converted into digital data, and the digital data and data of a replacement history of the sensor are recorded in a memory (for example, HDD or SSD). The data recorded in the memory are accumulated, and both data obtained from the sensor for diagnosis and past sensors are recorded. The memory (e.g., ROM) stores a diagnostic program, and the processor (e.g., CPU) processes the data recorded in the memory to diagnose the state of the sensor. Processes that are executed by the processor at the time are classified into first through third processes as follows:

The first process is a process of reading data for a set reference period from the memory from among the electrical signal data output from past sensors. The second process is a process of calculating a statistical value of the data for the reference period as an index for the diagnosis of the sensor. The third process is a process of diagnosing the state of the sensor for diagnosis on the basis of the index calculated in the second process. In the third process, data recorded during a set evaluation period are read from the memory from among the electrical signal data output from the sensor for diagnosis, and a statistical value of the data for the evaluation period is calculated. Then, it is determined whether the sensor for diagnosis is normal or abnormal on the basis of the difference obtained from the statistical value for the reference period and the statistical value for the evaluation period. A preferred mode of each of the first through third processes will be described below by way of illustrative example.

- First process -

· Regarding the setting of a reference period

In the first process, it is important how to specify a reference period. It is essential that a period in which a past sensor is in a good state be set as a reference period in order to generate an index for the diagnosis of a sensor for diagnosis on the basis of data acquired by the past sensor during the reference period. For example, if a period in which a sensor operated in a problem-free manner is clear from the data of an inspection history by service personnel, then the period can be set as a reference period. According to one preferred example, however, a period except a predetermined period prior to the replacement of the past sensor is set as a reference period. The predetermined period as a period of exclusion to be excluded from a reference period and the length of the reference period (or beginning and ending times thereof) depend on settings.

The predetermined period as the period of exclusion may be set as desired during a period exclusive of the period in which the sensor operated normally that is clear from the data of the inspection history. In a reasonable example, however, a certain period immediately before a past sensor is replaced with a new sensor is set as the predetermined period. This is because in case where a sensor is to be replaced due to deterioration or failure, there is a possibility that the sensor may have already been abnormal in a certain period immediately prior to the replacement. By setting the length of the predetermined period to an appropriate value, a certain level of validity is secured for the specified reference period as a period in which the sensor operated normally.

According to the computer processing, then when the lengths of a predetermined period and a reference period are given by settings, the processor calculates a time going back a predetermined period from the replacement of a past sensor on the basis of the replacement history of past sensors, and specifies a set period having an ending time indicated by the calculated time as a reference period. For example, providing the length of a predetermined period is 30 days (one month) and the length of a reference period is one week, 7 days ranging from 37 days to 31 days prior to the ending time (replacement time) of the period in which a past sensor was used are automatically specified as a reference period.

If the statistics of data of past sensors in a plurality of automatic analyzers are collected, then since the timing and interval of sensor replacement can be different from automatic analyzer to automatic analyzer, a reference period can be different from automatic analyzer to automatic analyzer. Moreover, an automatic analyzer in which sensors have been replaced a plurality of times can have a plurality of reference periods set depending on the number of past sensors used.

· Regarding the extraction of data

Data extracted from a specified reference period represent a basic data group for an index for the diagnosis of a sensor for diagnosis. All data in a reference period can be used to represent a basic data group or a set number of data extracted randomly or according to a setting rule (e.g., at certain time intervals) can be used to represent a basic data group. If a past sensor and a sensor for diagnosis are used to measure a plurality of measurement items (TSH, CEA, etc.), then a set number of data extracted from each of two or more selected measurement items can be used to represent a basic data group.

According to a study by the present inventors, it has been found that an automatic analyzer that uses a wide variety of reagents and samples should preferably extract data obtained under conditions close to those for measuring patient's samples as a basic data group in order to increase the diagnostic accuracy for the state of a sensor. Specifically, since the automatic analyzer generally analyzes several tens of measurement items, a number of analytic reagent kits are set in the automatic analyzer depending on the measurement items. The kinds of analytic reagent kits that are set are different from automatic analyzer to automatic analyzer. When response data from sensors are analyzed in measurements using reagents, sensor responses are varied due to different components of the analytic reagent kits. The study by the present inventors has indicated that there are cases where the diagnostic accuracy for sensor states is lowered by such varied sensor responses. In particular, it is understood that the varied sensor responses have a profound adverse effect in a case where the determination made by sensors is diagnosed from electric responses that are generated by the sensors when the sensors are instructed, rather than from measured data (measured values of the concentration of target components) of the measurement items. Furthermore, when an automatic analyzer is started up, it is practiced to measure an inner standard liquid of a sensor by applying a constant voltage to the electrodes of the sensor in order to confirm the stability of potentials on the electrodes. At this time, a response from the sensor is less likely to clearly reflect the state of the sensor than when a patent's sample is measured.

Thus, it is preferable to use data obtained from a past sensor at the time at least one of a patient's sample and a reference sample is measured, as a basic data group extracted from a reference period.

Furthermore, from the viewpoint of increasing the diagnostic accuracy for the state of a sensor, it can be advantageous to use data obtained under steady conditions as basic data. From that viewpoint, data obtained from a past sensor for QC measurement is more preferable as a basic data group than data obtained for the measurement of patient's samples where the concentrations of coexisting components other than measurement items are different, for example. This is because QC samples to be measured for QC are ready-made products and have stable components, QC measurement is often performed once or more times a day by each automatic analyzer, data production times suffer no deviation, and the number of data is necessary and sufficient enough. According to the study by the present inventors, an analysis of response data from a sensor while the sensor is measuring a patient's sample has occasionally found cases where the electric conductivity is affected by the amount of fat contained in the patient's sample.

In addition, from the viewpoint of extracting a basic data group that is higher in validity as normal data obtained from a past sensor that is of a normal state, data obtained when a reference sample is measured for a predetermined period as a period of exclusion referred to above can be used for confirming its aptitude for basic data. For example, the predetermined period is used as a confirmation period, and if the normal state of a past sensor for a reference period can be denied from data with respect to the measurement of a reference sample for the predetermined period, the data from the past sensor is not extracted as basic data. Typically, if the history of calibration, QC measurement, or dummy measurement carried out during the predetermined period contains a failure or an abnormality, then a calibration, QC failure, or a dummy measurement abnormality may possibly have occurred due to a sensor malfunction.

According to the computer processing, first, the processor records data indicating whether the measurement of a reference sample is successful or not in the memory each time a reference sample is measured using a past sensor. Then, for extracting a basic data group, the processor reads a history of the measurement of reference samples carried out during a predetermined period from the memory, and allows a basic data group to be extracted with respect to a past sensor if the measurement of all the reference samples is successful or normal. Accordingly, a reference period is set only with respect to a past sensor that is free of an error for QC or the like executed in a predetermined period, for example, and data obtained for the reference period from the sensor are extracted as a basic data group (or a portion thereof). Data from a sensor that suffers an error for QC or the like are filtered out and excluded from basic data because it is doubtful if the sensor has been in a normal state.

- Second process -

In the second process, if a sensor for diagnosis is used to measure a plurality of measurement items, then it is desirable to extract a set number of data with respect to each of two or more selected measurement items from data for a reference period of a past sensor, and collect the statistics of all the extracted data as combined. The selected measurement items may be all of the measurement items or may be some of the measurement items. A statistical value calculated on the basis of the data obtained by measuring the selected measurement items is used as an index for the diagnosis of a sensor for diagnosis. The calculated statistical value may be a value that is at least any one of an average value, a moving average value, a median value, and a standard deviation, or a value (a Z score or the like) based on the value that is at least any one of the above values, for example.

In the calculation of a statistical value, the differences between production lots and manufacturers of analytic reagent kits incorporated in each automatic analyzer may possibly affect the magnitude of data (raw data) of electrical signals obtained from a sensor. From the viewpoint of restraining the effect of the differences, for unifying and collecting the statistics of data of a plurality of measurement items, it is preferable to standardize the data of each measurement item in advance. For example, for acquiring data of electric resistance values measured when a voltage is applied to a sensor, the statistics of the measured electric resistance values are not collected as they are, but the electric resistance values for a set period are averaged and then the individual electric resistance values are standardized by being converted into deviations (differences with the average value). A set number of standardized data are extracted with respect to each of the measurement items, and the statistics of the extracted data are collected all together regardless of the different measurement items, thereby defining a single index for the diagnosis of a sensor for diagnosis.

- Third process -

· Regarding extraction and statistics of data

In the third process, the statistics of data from a sensor for diagnosis for a set evaluation period (hereinafter referred to as target data) are collected in the same manner as the second process. A statistical value of target data is a value that reflects the current state of a sensor for diagnosis, and the current state of the sensor for diagnosis is diagnosed by comparing the statistical value with a statistical value of basic data calculated in the second process. The evaluation period refers to a set period such as the latest week or month whose ending time is represented by the present time.

As regards methods of extracting and collecting statistics of target data, the same methods as with the first process and the second process can be used except that a target period for data extraction is an evaluation period, or stated otherwise, a sensor as a source for outputting data to be extracted is a sensor for diagnosis. For example, it is preferable to convert individual data from a sensor for diagnosis into deviation data and use them prior to collecting their statistics, as with data from a past sensor. Furthermore, the statistics of all data for an evaluation period can be collected as a target data group, and the statistics of a set number of data extracted randomly or according to a setting rule (e.g., at certain time intervals) can be collected as a target data group. If a sensor for diagnosis is used to measure a plurality of measurement items (TSH, CEA, etc.), then a set number of data with respect to each of two or more selected measurement items can be extracted as a basic data group. In this case, it is preferable to select measurement items that have been selected as basic data for an index in the first process. Moreover, data obtained from a sensor for diagnosis at the time at least one of a patient's sample and a reference sample is measured, preferably data obtained for QC measurement among others, can be used as candidates for data to be extracted as a target data group, as with the first process. A value that is at least any one of an average value, a moving average value, a median value, and a standard deviation, or a value (a Z score or the like) based on the value that is at least any one of the above values, for example, is used as a statistical value based on target data, as with the second process.

· Regarding the diagnosis of a sensor for diagnosis

As described above, a statistical value calculated in the second process represents an index for the collected statistics of data (i.e., basic data) for a reference period in which a past sensor is presumed normal. Therefore, if the difference (the magnitude of the absolute value of the difference) between a statistical value of target data calculated in the present process and a statistical value of basic data is large, then an abnormality of the sensor for diagnosis is doubted. According to the computer processing, a first determination value for determining an abnormality is set with respect to the difference between a statistical value of basic data and a statistical value of target data, for example. The processor then calculates the difference between the statistical value of basic data and the statistical value of target data, and determines that the sensor for diagnosis is abnormal if the difference is larger than the first determination value.

At this time, an algorithm for comparing the difference between statistical values with a first determination value can be applied as a diagnostic algorithm for the processor. Alternatively, there is also applicable another diagnostic algorithm for determining whether the difference between data for a reference period and data for an evaluation period according to a significant difference test based on a statistical value of basic data and a statistical value of target data is larger than a first determination value, i.e., whether a sensor for diagnosis is abnormal. According to a specific example, an average value and a standard deviation of basic data are calculated as a statistical value of data for a reference period, for example. Thereafter, a Z score is calculated by dividing the deviation from the average value of the basic data by the standard deviation of the basic data with respect to each of data for an evaluation period, and an average value of the calculated Z scores and a first determination value are compared to determine whether a sensor for diagnosis is abnormal. The first determination value in this case is such a value that if the magnitude (absolute value) of the average values of Z scores is equal to or smaller than the first determination value, then the hypothesis that the sensor for diagnosis is abnormal is rejected at a significant difference level (e.g., a probability of 5%). Stated otherwise, if the magnitude of the average values of the Z scores is larger than the first determination value, then the sensor for diagnosis is presumed abnormal. If the magnitude of the average values of the Z scores is equal to or smaller than the first determination value, then the sensor for diagnosis is presumed not abnormal.

The result of the diagnosis of a sensor for diagnosis (including a diagnosis indicating that the sensor for diagnosis is normal and a diagnosis indicating that the sensor for diagnosis is neither abnormal nor normal, as described later) is displayed, by the processor, on an UI (user interface) such as a monitor connected to the computer, so that the user or the like is informed about that. The UI may display a setting screen for setting determination conditions for a sensor for diagnosis, allowing settings of the determination conditions to be altered from preset values on the setting screen, thereby to adjust the diagnostic sensitivity for the sensor for diagnosis by the processor. The determination conditions that are set on the setting screen include at least one of the lengths of a reference period and a predetermined period, measurement items (TSH, CEA, etc.), a first determination value, a second determination value (to be described later), data types (voltage, current, resistance, etc.), measurement types (the measurement of a patient's sample, calibration, QC measurement, etc.). For example, a user who takes time to procure parts due to traffic conditions, etc. may want to employ stricter determination conditions for an increased diagnostic sensitivity and need to order new sensors early. Adjustable determination conditions make it possible to address such a user flexibly.

In addition to the process of determining that a sensor for diagnosis is presumed abnormal, a process of determining that a sensor for diagnosis is presumed normal may also be carried out. In the latter case, a second determination value whose absolute value is smaller than the first determination value, for example, is set. If the difference between a basic data group and a target data group based on a statistical value of basic data and a statistical value of target data is smaller than the second determination value, then the processor determines that a sensor for diagnosis is normal. A significant difference test can be applied to the process of presuming a sensor for diagnosis normal in the same manner as the process of presuming a sensor for diagnosis abnormal. For example, individual target data are converted into Z scores taking basic data into account as described above, and it is determined whether a sensor for diagnosis is normal on the basis of comparison between an average value of Z scores and a second determination value. The second determination value in this case is such a value that if the magnitude (absolute value) of the average values of Z scores is equal to or larger than the second determination value, then the hypothesis that the sensor for diagnosis is normal is rejected at a significant difference level (e.g., a probability of 5%). Stated otherwise, if the magnitude of the average value of the Z scores is smaller than the second determination value, then the sensor for diagnosis is presumed normal. The conclusion that a sensor for diagnosis is in a normal state and does not need to be replaced is useful for maintenance plans and inventory control for sensors.

As a result of the above determination process, there may arise a case where a sensor for diagnosis is neither abnormal nor normal, i.e., the data of a basic data group and the data of a target data group deviate from each other to the extent that a sensor for diagnosis is found neither abnormal nor normal. In this case, settings can be made to handle the automatic analyzer flexibly depending on the manner in which the automatic analyzer is operated, by determining that a sensor for diagnosis does not need to be replaced (is normal) from the viewpoint of avoiding shutdown of the automatic analyzer for maintenance as much as possible or that a sensor for diagnosis needs to be replaced (is abnormal) from the viewpoint of attaching importance to measurement accuracy.

Furthermore, if the data of a basic data group and the data of a target data group deviate from each other to the extent that a sensor for diagnosis is found neither abnormal nor normal, then the cause of the problem may be that the sensor for diagnosis is possibly abnormal or another part of the automatic analyzer than the sensor for diagnosis is possibly defective. Accordingly, the conclusion that the sensor for diagnosis is abnormal or normal may not be drawn, and a possible deficiency of various parts, including the sensor for diagnosis, involved in measurements may be informed to prompt the user or service personnel to conduct an inspection to identify the cause of the deficiency or to wait and see how the situation develops. According to the computer processing, if the difference between a statistical value of basic data and a statistical value of target data is equal to or smaller than the first determination value and equal to or larger than the second determination value, then the processor makes a determination about a sensor for diagnosis taking into account the cause of a deficiency of parts except the sensor for diagnosis. In a specific example, if the difference between a statistical value of basic data and a statistical value of target data is equal to or smaller than the first determination value and equal to or larger than the second determination value, the processor may inform the user or the like about the determination via the UI. At this time, the result of the determination that the difference between a statistical value of basic data and a statistical value of target data is equal to or smaller than the first determination value and equal to or larger than the second determination value may be informed simply as a displayed text. Alternatively, the processor may inform the user or the like about a specific recommended measure by displaying a text that represents a comment for prompting the user or the like to inspect parts, including the sensor for diagnosis, involved in measurements, for example.

In the example described above, the abnormality and normality of a sensor for diagnosis are determined by a one-sided t-test. However, a double-sided t-test may also be applicable. At any rate, a significant difference test for comparing target data with basic data is useful as an algorithm for determining whether a sensor of an automatic analyzer is abnormal or normal. Generally, since automatic analyzers used for measuring patient's samples are not operated while leaving sensors in an abnormal state, it is difficult to collect data of abnormal sensors and to define an abnormal state based on abnormality data. In contrast, it is possible to appropriately diagnose the state of a sensor for diagnosis by defining a reference period in which a past sensor is presumed normal and conducting a significant difference test using basic data sampled from the reference period.

3. First embodiment

The present invention is applicable to automatic analyzers. An analytic unit incorporated in an automatic analyzer may be a biochemical analyzer, an immune analyzer, or the like. However, these analyzers are by way of example only, and the present invention is not limited to the embodiment to be described below, but is widely applicable to automatic analyzers incorporating analytic units for analyzing samples on the basis of the results of reactions with reagents. For example, the applications of the present invention may include mass spectrometers for use in clinical examinations and automatic analyzers incorporating a coagulation analyzer for measuring blood coagulation times, for example. Moreover, the present invention is also applicable to a composite automatic analyzer incorporating a plurality of various analytic units and an automatic analyzing system including at least one automatic analyzer. A specific embodiment in which the present invention is applied to the diagnosis of a sensor for measuring measurement items in an automatic analyzer will be described below with reference to the drawings.

- Automatic analyzer -

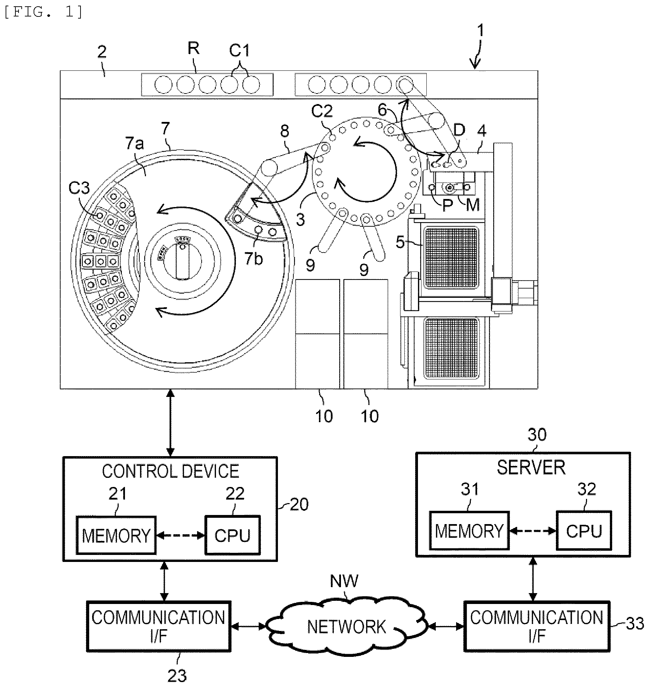

FIG. 1 is a plan view schematically illustrating a configurational example of an automatic analyzer to which a diagnostic system according to a first embodiment of the present invention is applied. The automatic analyzer 1 in FIG. 1, includes a rack transfer line 2, an incubator disk 3, a first transfer mechanism 4, a holding member 5, a sample dispensing nozzle 6, a reagent disk 7, a reagent dispensing nozzle 8, second transfer mechanisms 9, analytic units 10, and a control device 20.

The rack transfer line 2 refers to a unit for transferring racks R, and transfers each rack R to a sample dispensing position where the sample dispensing nozzle 6 dispenses samples. A plurality of sample receptacles C1 for holding samples can be placed on each rack R. In the example of FIG. 1, samples are transferred along the line by way of example. However, a disk-shaped transfer unit that is rotatable for transferring samples may be provided.

The incubator disk 3 is a disk for supporting reaction receptacles C2 placed thereon, and can hold the plurality of reaction receptacles C2 in an annular array. The incubator disk 3 is rotatable by an actuator, not shown, for moving the desired reaction receptacles C2 to a plurality of predetermined positions that include the sample dispensing position where the sample dispensing nozzle 6 dispenses samples.

The first transfer mechanism 4 refers to a unit for transferring sample dispensing tips and the reaction receptacles C2. The first transfer mechanism 4 is movable along three X, Y, and Z axes to transfer sample dispensing tips and the reaction receptacles C2 between an agitating mechanism M and a predetermined position on the incubator disk 3, a disposal hole D and a tip mounting position P, and the holding member 5. The agitating mechanism M refers to a unit for agitating samples accommodated in the reaction receptacles C2. The disposal hole D refers to a hole where sample dispensing tips and reaction receptacles that have been used are disposed of. The tip mounting position P refers to a position where sample dispensing tips are mounted on the sample dispensing nozzle 6.

The holding member 5 refers to a member for holding sample dispensing tips and the reaction receptacles C2, and hold a plurality of sample dispensing tips and the reaction receptacles C2 disposed thereon that have not been used. The unused reaction receptacles C2 held on the holding member 5 is transferred by the first transfer mechanism 4 and disposed in a predetermined position on the incubator disk 3. Similarly, an unused sample dispensing tip held on the holding member 5 is transferred by the first transfer mechanism 4 and disposed in the tip mounting position P.

The sample dispensing nozzle 6 refers to a unit for sucking and delivering samples. The sample dispensing nozzle 6 is configured so as to be turnable and vertically movable. The sample dispensing nozzle 6 is turned to a position above the tip mounting position P and then lowered to have a sample dispensing tip pressed into a distal end thereof, so that the sample dispensing tip is mounted on the sample dispensing nozzle 6. The sample dispensing nozzle 6 with the sample dispensing tip mounted thereon is moved to a position above a sample receptacle C1 placed on one of the racks R and then lowered to suck a predetermined amount of sample held in the sample receptacle C1. The sample dispensing nozzle 6 that has sucked the sample is moved to a position above the incubator disk 3 and then lowered, and delivers the sample into an unused reaction receptacle C2 held on the incubator disk 3. After having delivered the sample, the sample dispensing nozzle 6 is moved to a position above the disposal hole D and disposes of the used sample dispensing tip through the disposal hole D.

The reagent disk 7 refers to a unit on a disk on which a plurality of reagent receptacles C3 are disposed. A disk cover 7a (with a left portion shown broken away in FIG. 1) is disposed over the reagent disk 7. The inside of the reagent disk 7 is kept warm at a predetermined temperature. The disk cover 7a has an opening 7b defined in a portion thereof that is close to the incubator disk 3.

The reagent dispensing nozzle 8 refers to a unit for sucking and delivering reagents. As with the sample dispensing nozzle 6, the reagent dispensing nozzle 8 can be turned and vertically moved. The reagent dispensing nozzle 8 is turned to a position above the opening 7b in the disk cover 7a and then lowered to have a distal end thereof inserted into a predetermined reagent receptacle C3 and suck a predetermined amount of reagent therefrom. Then, the reagent dispensing nozzle 8 is elevated and turned to a position above a predetermined position on the incubator disk 3, and delivers the reagent into the reaction receptacle C2 where the sample is kept.

The reaction receptacle C2 into which the sample and the reagent have been delivered is moved to a predetermined position on the incubator disk 3 upon rotation thereof, and then transferred to the agitating mechanism M by the first transfer mechanism 4. The agitating mechanism M rotates the reaction receptacle C2 to agitate and mix the sample and the reagent in the reaction receptacle C2 with each other. The reaction receptacle C2 that has finished the agitation of the sample and the reagent is moved back to the predetermined position on the incubator disk 3.

The second transfer mechanisms 9 refer to units for transferring the reaction receptacles C2 between the incubator disk 3 and the analytic unit 10, and are configured so as to be turnable and vertically movable. Each of the second transfer mechanisms 9 grips a reaction receptacle C2 that has been returned to the incubator disk 3 after the sample and the reagent has been mixed in the reaction receptacle C2, are elevated, turned, and moved to transfer the reaction receptacle C2 to one of the analytic units 10.

Each of the analytic units 10 refers to a unit for measuring measurement items of a particular biological component, a chemical substances, etc. contained in the reaction liquid in the reaction receptacle C2. A sensor for diagnosis to be diagnosed according to the present embodiment is used in the analytic units 10. The sensor will be described later.

The control device 20 includes a computer including a memory 21 such as a RAM, a ROM, a HDD, or an SSD, a processing device 22 such as a CPU or a timer. The control device 20 controls various devices incorporated in the automatic analyzer 1 and records and processes data entered from the analytic units 10, etc. Further, the control device 20 is housed in an outer casing of the automatic analyzer 1 or installed outside of the outer casing and directly connected to the automatic analyzer 1 itself by a wired or wireless link, for example.

The control device 20 is connected to a server 30 via a communication interface 23, a network NW, and a communication interface 33. The server 30 also includes a computer including a memory 31 such as a RAM, a ROM, a HDD, or an SSD, a processing device 32 such as a CPU or a timer. According to the present embodiment, a diagnostic function for diagnosing a sensor for diagnosis used in the automatic analyzer 1 is incorporated in the server 30. In the server 30, the memory 31 records data acquired by the automatic analyzer 1 or a plurality of automatic analyzers including the automatic analyzer 1, and the processing device 32 processes the data recorded in the memory 31 to diagnose the sensor for diagnosis in the automatic analyzer 1 (to be described later).

- Sensor -

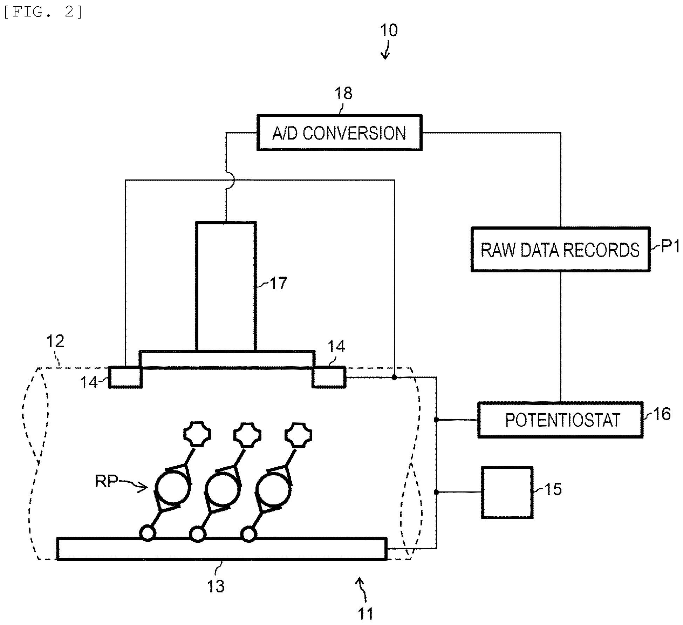

FIG. 2 is a schematic diagram of a sensor used for measuring a sample in the automatic analyzer 1 illustrated in FIG. 1. Each of the analytic units 10 of the automatic analyzer 1 includes a flow-cell-type sensor 11. The sensor 11 includes a flow cell 12 and three electrodes (a reference electrode 13, a counter electrode 14, and a working electrode 15) disposed in the flow cell 12. The three electrodes are controlled by a potentiostat 16 to develop an objective voltage. While a reaction product RP from a sample and a reagent is being trapped by the reference electrode 13, when a particular voltage is applied between the reference electrode 13 and the working electrode 15 by the potentiostat 16, the reaction product RP emits light. The emission intensity of the reaction product RP is detected by a photomultiplier tube 17 that is disposed across the flow cell 12 from the reference electrode 13 (upwardly of the flow cell 12 in FIG. 2). The emission intensity detected by the photomultiplier tube 17 is converted by an A/C converter 18 into a numerical value, which is recorded as raw data of a measured value of a measurement item, together with measurement date and time, into the memory 21 (or a memory of the sensor 11) through a raw data recording process P1. At this time, a current value, a voltage value, and a resistance value developed between the counter electrode 14 and the working electrode 15 by the voltage applied between the reference electrode 13 and the working electrode 15 are measured by the potentiostat 16. According to the present embodiment, not only the output from the photomultiplier tube 17, but also the voltage value applied between the reference electrode 13 and the working electrode 15, and the current value, the voltage value, and the resistance value developed between the counter electrode 14 and the working electrode 15 are recorded in the raw data recording process P1.

- Operation of the automatic analyzer -

In order to perform a qualitative analysis and a quantitative analysis highly accurately on an analytic target component contained in a patent's sample that is an unknown sample, calibration and QC measurement are performed. For performing a quantitative analysis, for example, the automatic analyzer 1 is daily operated according to the working sequence (1) to (5) below.

(1) Startup

First, the power is switched on to start up the automatic analyzer 1. When necessary, the automatic analyzer 1 is serviced for maintenance by installing the reagent receptacles C3 and initially filling them with reagents, regulating the temperature inside the reagent disk 7, and applying a certain voltage to the electrodes to continuously measure an internal standard liquid and check if the potentials at the electrodes of the sensor 11 are stabilized.

(2) Calibration

High-concentration standard samples and low-concentration standard samples where the concentrations of measurement items (analytic target components) are known are measured. By measuring the standard samples, a relational expression (calibration curve) is created between the concentrations of the measurement items and the outputs of the sensor 11 (photomultiplier tube 17). The frequency of calibration differs from measurement item to measurement item. For example, calibrations with respect to respective measurement items are conducted periodically (e.g., in one-month periodic cycles) in turns.

(3) QC measurement

A plurality of QC samples having different concentration levels where ranges that cover the concentrations of measurement items are known are measured, and the concentrations of measurement items in the QC samples are calculated using the calibration curve created in the calibration. It is confirmed if the calibration curve is adequate by checking whether the calculated concentrations fall within the known concentration ranges of the QC samples. The QC measurement is frequently conducted because it is regarded as a state confirmation process for ensuring the result of measurement of a patient's sample. For example, QC measurement is carried out concurrently on a plurality of measurement items at a frequency of one through three times a day.

(4) Patient's sample measurement

A patient's sample where the concentrations of measurement items are unknown is measured, and the concentrations of the measurement items are calculated using the calibration curve. Prior to the patient's sample measurement, so-called background measurement or dummy measurement may be carried out to confirm the state of the automatic analyzer 1.

(5) Shutdown

Various parts of the automatic analyzer 1 are cleaned, inspected, and otherwise dealt with, when necessary, and the power is tuned off, shutting down the automatic analyzer 1.
When standard samples, QC samples, dummy samples, etc. as well as patient's samples are measured, the steps of cleaning and conditioning the flow cell 12 and detecting the emission intensity are repeatedly carried out in the sensor 11. Since appropriate values of voltages applied to the electrodes in these steps are different from each other, the voltage applied to the electrodes by the potentiostat 16 in one cycle of measurement is controlled in a complex manner. For example, in the cleaning step, a voltage is applied in a particular pattern to the electrodes for a certain period of time while the flow cell 12 is being supplied with a cleaning liquid so as to keep the reaction product RP from a previous cycle of measurement from remaining the sensor 11. In the conditioning step, in order to optimize the electrodes for measurement, a voltage is applied in a pattern different from the pattern in the cleaning step to the electrodes for a certain period of time while the flow cell 12 is being supplied with an auxiliary reagent. In the detecting step, a voltage required for the reaction product RP trapped by the reference electrodes 13 to cause a light-emission reaction is applied to the electrodes. In this fashion, voltages are repeatedly applied in complex patterns continuously and accurately to the electrodes as samples are measured.

- Data processing flow (automatic analyzer) -

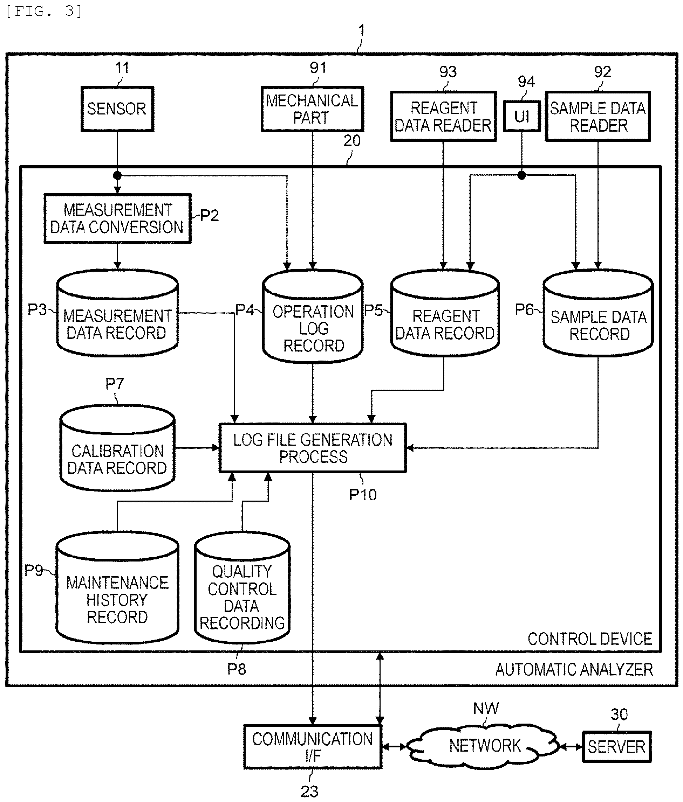

FIG. 3 is a block diagram illustrating a data processing flow in the automatic analyzer illustrated in FIG. 1. The automatic analyzer 1 has a control device 20 to which there are entered data from the sensor 11, a mechanical part 91, a sample data reader 92, a reagent data reader 93, and a UI (user interface) 94.

The sensor 11 enters data recorded in the raw data recording process P1 (FIG. 2) to the control device 20 from time to time. The data entered from the sensor 11 to the control device 20 include not only data obtained when a patient's sample is measured, but also data from various types of measurement including QC measurement, calibration, and dummy measurement conducted as a preparatory process prior to the measurement of a patient's sample, for example.

The mechanical part 91 refers collectively to various pieces of hardware (the sample dispensing nozzle 6, the incubator disk 3, etc.) incorporated in the automatic analyzer 1. The data entered from the mechanical part 91 to the control device 20 include, for example, log data representing operation timings, operation quantities, and current values of various motors, signals from sensors used to control the motors, and opening and closing timings and current values of fluid valves.

The sample data reader 92 refers to a device for reading registered data of samples (e.g., a bar code or RFID reader), and is incorporated in the automatic analyzer 1. Each sample receptacle C1 is assigned a recording medium such as a bar code or an RFID, and the sample data reader 92 reads sample data recorded in the recording medium. The data read by the sample data reader 92 and entered to the control device 20 represent IDs of samples, for example.

The reagent data reader 93 refers to a device for reading registered data of reagents (e.g., a bar code or RFID reader), and is incorporated in the automatic analyzer 1. Each reagent receptacle C3 is assigned a recording medium such as a bar code or an RFID, and the reagent data reader 93 reads reagent data recorded in the recording medium. The data read by the reagent data reader 93 and entered to the control device 20 represent IDs, lot numbers, and validated dates of reagents, for example.

The UI 94 includes a monitor and input device that the user uses to browse data and enter data to the control device 20, and is incorporated in the automatic analyzer 1. Various data are entered from the UI 94 to the control device 20. For example, data regarding a reagent include the ID, lot number, validated date, on-board validated date, and required remaining amount of a reagent used in measuring a sample, and are entered to the control device 20. Data regarding a sample include the ID, measurement type (patient's sample measurement, QC measurement, calibration, dummy measurement, or the like) of the sample, measurement items, etc. and are entered to the control device 20.

The various data that are entered to the control device 20 as described above are processed in real time by the processing apparatus 22, and transmitted as log files via the communication interface 23 to the server 30. Processes that are carried out on measured data by the processing apparatus 22 include a measurement data conversion process P2 and a measurement data recording process P3. Other processes that are carried out by the processing apparatus 22 include an operation log recording process P4, a reagent data recording process P5, a sample data recording process P6, a calibration data recording process P7, a quality control data recording process P8, a maintenance history recording process P9, and a log file generation process P10. These processes will be described successively below.

· Measurement data conversion process

In the measurement data conversion process P2, the processing device 22 converts measurement values (raw data) entered from the sensor 11 into valid values. The measurement values entered from the sensor 11 include raw data of an emission intensity, a current value, a voltage value, and a resistance value.

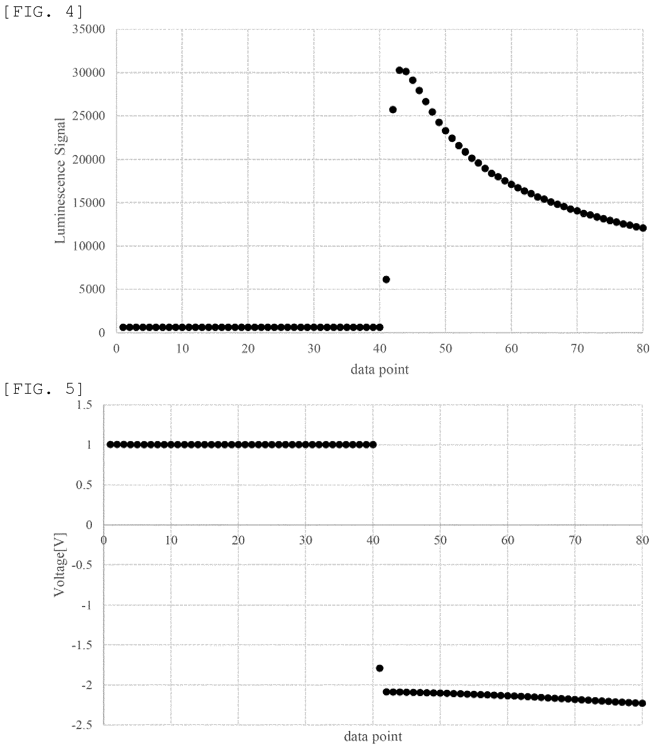

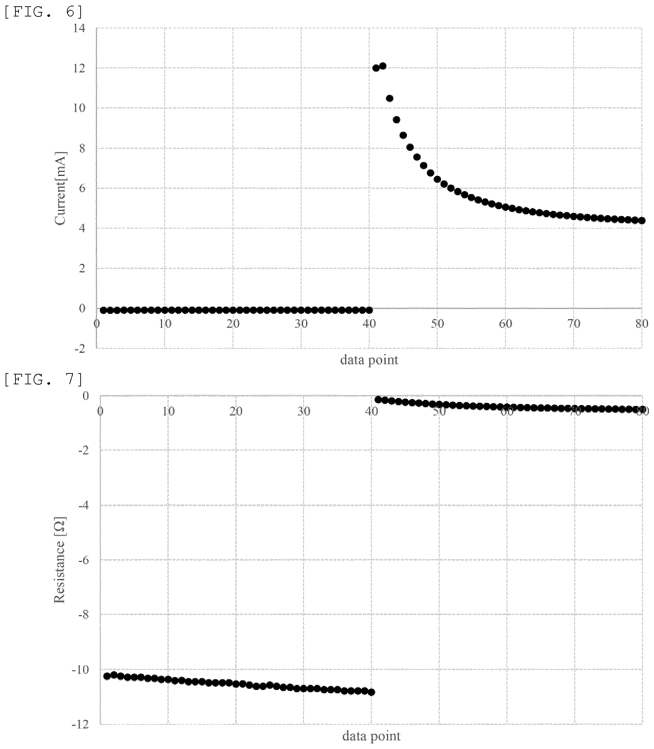

FIG. 4 illustrates an example of time-series data of emission intensity measured at the time of sample measurement. FIG. 5 illustrates an example of time-series data of voltage values measured at the time of sample measurement. FIG. 6 illustrates an example of time-series data of current values measured at the time of sample measurement. FIG. 7 illustrates an example of time-series data of resistance values measured at the time of sample measurement. Each of these figures has a horizontal axis representing discrete times, and illustrates measured values plotted at the respective discrete times. When a sample is measured, the control device 20 applies a voltage to the electrodes at a particular timing from the start of measurement to take in data. In the examples illustrated in FIGS. 4 through 7, a predetermined voltage is applied between the reference electrode 13 and the working electrode 15 at the 41st data point.

According to such control characteristics, the processing device 22 converts a measured value (raw data) entered from the sensor 11 upon each action of measurement into a valid value using two equations below that are stored in the memory 21 (e.g., ROM) in advance.

[Equation 1]

$$\text{Effective value} = \sum_{i=41}^{120} Signal_i - Blank_{ave}$$

[Equation 2]

$$Blank_{ave} = {\Sigma_{i=1}^{40} Signal_i}\Big/{40}$$

· Measurement data recording process

In the measurement data record process P3, the processing device 22 assigns a measurement ID to each action of measurement and records the raw data and valid value of the measured value while being linked with the measurement ID in the memory 21.

· Operation log recording process

In the operation log recording process P4, the processing device 22 records an operation log entered from the mechanical part 91 and the sensor 11 in the memory 21. The operation log entered from the mechanical part 91, etc. includes operation timings, operation quantities, and current values of various motors, signals from sensors used to control the motors, opening and closing timings and current values of fluid valves, etc.

· Reagent data recording process

In the reagent data recording process P5, the processing device 22 matches reagent data entered from the reagent data reader 93 against condition data recorded in the memory 21, and records the reagent as a usable reagent in the memory 21 if the reagent data match the condition data. The condition data against which the reagent data are matched represent the IDs, lot numbers, validated date, on-board validated date, required remaining amounts of reagents, etc. The condition data are entered via the UI 94 to the control device 20 or entered from another computer via the communication interface 23 to the control device 20, and then recorded in the memory 21. In the reagent data recording process P5, the processing device 22 records, in the memory 21, a history of reagents that have been used with respect to each measurement ID. The raw data of measured values, the valid values thereof, and the data of the reagents used for measurement are thus linked with each other through measurement IDs.

· Sample data recording process

In the sample data recording process P6, the processing device 22 matches sample data entered from the sample data reader 92 against condition data recorded in the memory 21, records the sample as a measurable sample in the memory 21 if the sample data match the condition data, and carries out a measurement at a suitable time. The condition data against which the sample data are matched represent sample IDs, measurement types (QC measurement, patient's sample measurement, etc.), measurement items, etc. The condition data are entered via the UI 94 to the control device 20 or entered from another computer via the communication interface 23 to the control device 20, and then recorded in the memory 21.

· Calibration data recording process

In the calibration data recording process P7, the processing device 22 records, in the memory 21, a history of performed calibrations for calculating the concentrations of measurement items of a patient's sample, each time a calibration is carried out. Specifically, calculated calibration curves, dates and times of calibration and measurement items, whether calibrations have been successful or not, etc. are recorded as a history of performed calibrations in the memory 21.

· Quality control data recording process

In the quality control data recording process P8, the processing device 22 records a history of performed QC measurements in the memory 21. Specifically, measurement items, the results of QC determination (whether it has been successful or not), etc. are recorded as a history of performed QC measurements in the memory 21.

· Maintenance history recording process

In the maintenance history recording process P9, the processing device 22 records a maintenance history in the memory 21. Specifically, a history of inspections performed by the user, replacements of sensors performed by the service personnel, etc. are recorded as a maintenance history in the memory 21.

• Log file generation process

In the log file generation process P10, the processing device 22 generates a log file by collecting, with respect to each measurement, data required for a failure analysis of the sensor 11 from among the data stored in the memory 21. Further, the processing device 22 transmits the log file via the communication interface 23 and the network NW to the server 30. Since log files are created with respect to respective measurements and uploaded sequentially to the server 30, the server 30 accumulates not only measurement data from the sensor 11 that is in current use in the automatic analyzer 1, but also measurement data from the past sensors 11 that were used in the automatic analyzer 1.

- Sensor analysis processing flow (server) -

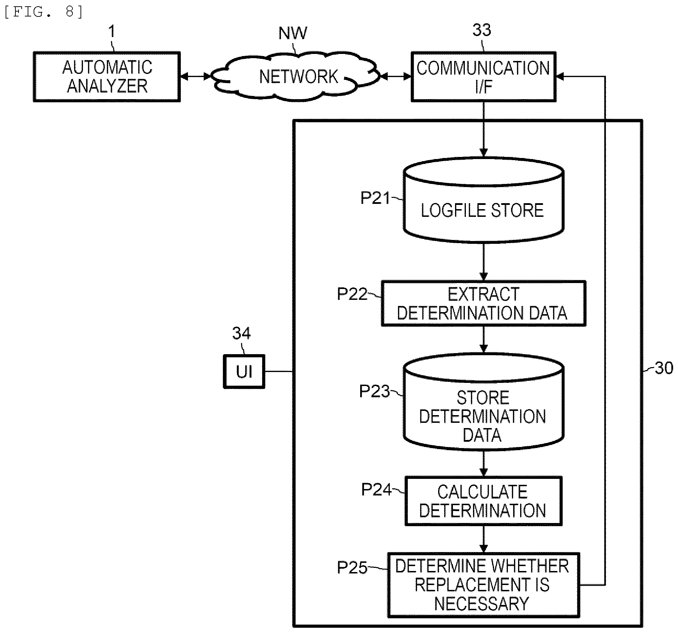

FIG. 8 is a block diagram illustrating a sensor diagnosis processing flow in a server. According to the present embodiment, the diagnosing function of the sensor 11 of the automatic analyzer 1 is performed by the server 30, and the server 30 configures a diagnostic system. When the server 30 receives a log file from the automatic analyzer 1, the processing device 32 records the log file in the memory 31 in a logfile storing process P21. Then, in a next determination data extracting process P22, the processing device 32 extracts data required to diagnose the sensor 11, such as a valid value of a measurement value, a QC result, a calibration result, and a replacement history of the sensor 11, from the log file stored in the memory 31. In a next determination data storing process P23, the processing device 32 stores the extracted data required to diagnose the sensor 11 in the memory 31. Thereafter, when a diagnosis is to be carried out, the processing device 32 reads the required data from the memory 31 in a determination calculating process P24. Then, on the basis of the result of the calculation in the determination calculating process P24, the processing device 32 diagnoses the sensor 11 to determine whether the sensor 11 needs to be replaced or not in a replacement need determining process P25. The determination result is transmitted via the communication interface 33 and the network NW to the automatic analyzer 1, where the user or the like is informed about the determination result by being displayed on the UI 94. It is possible to display the diagnostic result on a UI (user interface) 34 of the server 30. The UI 34 of the server 30 is the same as the UI 94 of the control device 20 of the automatic analyzer 1.

- Determination calculating process -

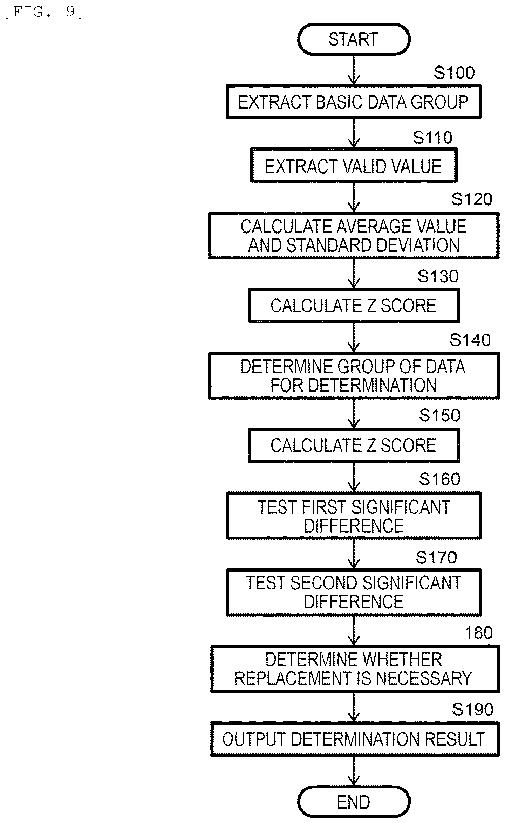

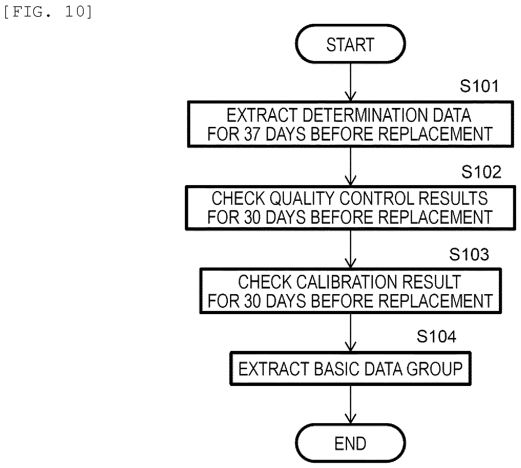

FIG. 9 is a flowchart illustrating a detailed procedure of a determination calculating process and a replacement need determination process in the flow of FIG. 8. FIG. 10 is a flowchart illustrating a detailed procedure for extracting a basic data group in the flow of FIG. 9. Here, an example in which the state of the electrodes of the flow-cell-type sensor 11 is diagnosed by the processing device 32 will be described below. The determination calculating process represents steps 100 to 130 in the flow illustrated in FIG. 9, and corresponds to the first process and the second process described in the mode for implementing the invention.

· Step 100

When the flow of FIG. 9 is started, the processing device 32 first reads the determination data obtained by the past sensor 11, from the memory 31, and extracts from the determination data a basic data group as a basis for indices for the diagnosis of the past sensor 11 that is being currently used in the automatic analyzer 1 (step 100). The processing device 32 sets a reference period in which the past sensor 11 is presumed as operating normally in the automatic analyzer 1 according to a default algorithm, and extracts data acquired by the past sensor 11 during the reference period as the basic data group.

Details of step 100 will be described below with reference to FIG. 10. According to an example to be described below, the day on which the past sensor 11 is replaced is set to the 0th day, the "predetermined period" referred to in the mode for implementing the invention is set to 30 days from the -30th to 0th day, and the "reference period" referred to in the modes for carrying out the invention is set to one week from the -37th to -31st day.

· step 101

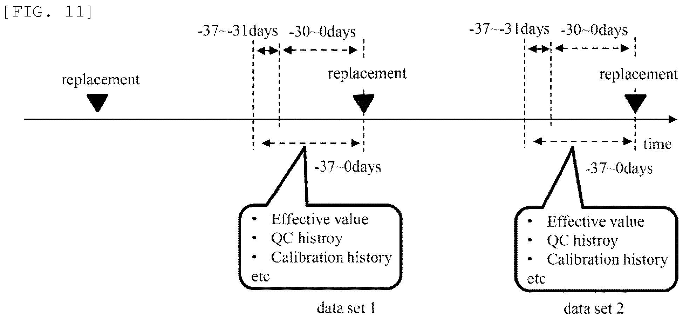

In the sequence of step 100, the processing device 32 first reads determination data for 37 days immediately before the past sensor 11 is replaced, e.g., a QC result, a calibration result, and a valid value of a measured value, from the memory 31 (step 101). For the convenience of description, the data for 37 days with respect to the past sensor 11 will be referred to as "data set." At this time, providing the server 30 has collected data of other automatic analyzers than the automatic analyzer 1, the processing device 32 also reads determination data with respect to the past sensor 11 that have been acquired by the other automatic analyzers. Some automatic analyzers may have sensors 11 replaced a plurality of times. In such a case, a plurality of data sets (i.e., as many data sets as the number of past sensors 11 that were replaced) are read from one automatic analyzer (see FIG. 11).

· Step 102

Then, the processing device 32 refers to data, included in the data set, of QC measurement during 30 days (-30th to 0th day) immediately prior to the replacement, and confirms that data representing a QC failure are not included in the QC measurement (step 102). Whether the QC measurement has been successful or not is determined from the data recorded during the course in which the automatic analyzer 1 collects the log file. If the server 30 determines whether the QC has been successful or not, then the server 30 calculates a Z score (to be described later) from the measured data of the QC measurement, for example, and determines QC whose Z score falls out of the range of $\pm 3$ as a failure. In step 102, the processing device 32 excludes a data set where QC has failed even once during 30 days prior to the replacement from the source from which the basic data have been extracted. In this manner, a basic data group is not extracted from the data set of the past sensor 11 where QC has failed during 30 days prior to the replacement.

· Step 103

Furthermore, the processing device 32 refers to calibration data, included in the data set, during 30 days (-30th to 0th day) immediately prior to the replacement, and confirms that data representing a calibration failure are not included in the calibration data (step 103). Whether the calibration has been successful or not is determined from the data recorded during the course in which the automatic analyzer 1 collects the log file. If the server 30 determines whether the calibration has been successful or not, then the server 30 can do so according to the same algorithm as the one that the server 30 uses to determine whether the QC has been successful or not. In step 103, the processing device 32 excludes a data set where QC has failed even once during 30 days prior to the replacement from the source from which the basic data have been extracted. In this manner, a basic data group is not extracted from the data set of the past sensor 11 where calibration has failed during 30 days prior to the replacement.

According to the present embodiment, a filtering process is carried out for a basic data group on the basis of whether QC and calibration have been successful or not. However, a filtering process may be carried out for a basic data group on the basis of the result of dummy measurement. In such a case, the fact that a valid value or a variation of a measured value of dummy measurement falls in a prescribed range may be used as a condition for a basic data group.

· Step 104

As described above, a filtering process is carried out on the basis of whether QC and calibration during 30 days prior to the replacement have been successful or not. Only a data set that is free of a failure history with respect to QC and calibration is extracted, and a basic data group is extracted from data from -37th to -31st days of the extracted data set (step 104). Data extracted as the basic data group refer to a set number (e.g., 50) of data sampled randomly from the data in the period from -37th to -31st days. The type of measurement of the data to be sampled is at least one type selected by settings from among QC measurement, calibration, patient's sample measurement, and dummy measurement. If there are a plurality of measurement items, then data about the plural measurement items may be selected in a mixed fashion.

· Step 110

Referring back to FIG. 9, the processing device 32 extracts a valid value from the basic data group extracted in step S100 (step S110). Here, it is assumed that a valid value of the resistance value between the counter electrode 14 and the working electrode 15 as measured upon measurement of the basic data group is extracted.

· Step 120

Then, the processing device 32 calculates an average value (XallAve) and a standard deviation (XallSD) of all data (Xall) extracted in step 110 (step 120).

· Step 130

After having calculated the average value and the standard deviation, the processing device 32 calculates a Z score (ZscoreSTD) with respect to individual data (Xstd) of the all data (Xall) extracted in step 110 (step 130). The Z score (ZscoreSTD) is calculated by subtracting the average value (XallAve) calculated in step 120 from the individual data (Xstd) and dividing the difference by the standard deviation (XallSD) as indicated by the equation shown below.

[Equation 3]

$$ZscoreSTD = \frac{Xstd - X_{allAve}}{X_{allSD}}$$

The processing of the basic data group is completed in step 130. The sequence up to step 130 corresponds to the processing details of the determination calculating process P24.

- Replacement need determining process

The sequence from step 140 on represents the replacement need determining process P25 based on the data of the sensor for diagnosis, i.e., the sensor 11 that is currently used in the automatic analyzer 1. The replacement need determining process P25 corresponds to the third process described in the mode for implementing the invention.

· Step 140

The processing device 32 extracts a target data group to be compared with the basic data group for diagnosing the sensor for diagnosis, from the data of the sensor for diagnosis (step 140). Data to be extracted as the target data group refer to a set number (e.g., 50 or more of the basic data group) of data sampled randomly from the data for a set most recent period (e.g., one week up to the present). The type of the data to be sampled refer to data corresponding to the basic data group, and represents a valid value of the resistance value in the present embodiment. The type of measurement of the data to be sampled is at least one type selected from QC measurement, calibration, patient's sample measurement, and dummy measurement in a manner corresponding to the condition for extracting the basic data group. If there are a plurality of measurement items, then data about the multiple measurement items may be selected in a mixed fashion in a manner corresponding to the extraction of the basic data group.

· Step 150

Then, the processing device 32 calculates a Z score (ZscoreJDG) with respect to individual data (XJDG) of the extracted target data group (step 150) in accordance with the following equation. The following equation represents an example in which the Z score (ZscoreJDG) is calculated by subtracting the average value (XallAve) of the basic data group from the individual data (XJDG) of the target data group and dividing the difference by the standard deviation (XallSD) of the basic data group.

[Equation 4]

$$ZscoreJDG = \frac{X_{JDG} - X_{allAve}}{X_{allSD}}$$

· Step 160

After having calculated the Z score (ZscoreJDG) with respect to individual data (XJDG) of the target data group, the processing device 32 carries out a first significant difference test (step 160). According to the present embodiment, a one-sided t-test is exemplified as the first significant difference test. According to the first significant difference test, an average value of the Z score (ZscoreJDG) calculated in step 150 is calculated, and the test is conducted at a significant difference level of 5% on the basis of the hypothesis that the sensor 11 needs to be replaced if the average value is smaller than the first determination value. That is, if the average value of the Z score (ZscoreJDG) is smaller than the first determination value, indicating that there is a significant difference, then it means that the sensor 11 is in such a state that it needs to be replaced.

According to the present embodiment, it is supposed that the value of the target data group decreases with respect to the value of the basic data group depending on the degree of deterioration of the sensor 11, and the first determination value is set to a negative value. Therefore, the fact that the average value of the Z score (ZscoreJDG) is smaller than the first determination value means that the difference of the data of the target data group from the data of the basic data group is large.

· Step 170

After having conducted the first significant difference test, the processing device 32 carries out a second significant difference test (step 170). In the present embodiment, a one-sided t-test is exemplified as the second significant difference test. According to the second significant difference test, the test is conducted at a significant difference level of 5% on the basis of the hypothesis that the sensor 11 does not need to be replaced if the average value of the Z score (ZscoreJDG) is larger than the second determination value. That is, if the average value of the Z score (ZscoreJDG) is larger than the second determination value, indicating that there is a significant difference, then it means that the sensor 11 is in such a state that it does not need to be replaced.

In the present embodiment, it is supposed that the value of the target data group decreases with respect to the value of the basic data group depending on the degree of deterioration of the sensor 11, and the second determination value is also set to a negative value. However, the second determination value has its absolute value smaller than the first determination value and close to 0. Therefore, the fact that the average value of the Z score (ZscoreJDG) is larger than the second determination value means that the difference of the data of the target data group from the data of the basic data group is small.

· Step 180

After having conducted the second significant difference test, the processing device 32 determines whether the sensor 11 needs to be replaced or not on the basis of the results of the first significant difference test and the second significant difference test (step 180).

Specifically, if the result of the first significant difference test indicates that there is a significant difference and the result of the second significant difference test indicates that there is no significant difference, then the processing device 32 determines that the sensor 11 needs to be replaced. If the result of the first significant difference test indicates that there is no significant difference and the result of the second significance test indicates that there is a significant difference, then the processing device 32 determines that the sensor 11 does not need to be replaced. If both the results of the first significant difference test and the second significant difference test indicate that there is no significant difference, then the processing device 32 determines that some part of the automatic analyzer 1 including the sensor 11 is malfunctioning. If both the results of the first significant difference test and the second significant difference test indicate that there is a significant difference and they contradict each other, then the processing device 32 does not determine whether the sensor 11 needs to be replaced or not.

· Step 190

Finally, the processing device 32 outputs the result of the determination via the communication interface 33, and informs the user or the like about the result of the determination through the UI 94 of the automatic analyzer 1, for example, after which the diagnosing process illustrated in FIG. 9 is ended (step 190). The result of the determination may not be informed via the UI 94 of the automatic analyzer 1, but may be informed via another UI, e.g., the UI 34 of the server 30 or the UI of a computer in a service center. For example, if the first significant difference test indicates that there is a significant difference and the second significant difference test indicates that there is no significant difference, then a text indicating that the sensor 11 needs to be replaced is displayed on the UI 94, prompting the user or the like to act to replace the sensor 11. If the first significant difference test indicates that there is no significant difference and the second significant difference test indicates that there is a significant difference, then a text indicating that the sensor 11 does not need to be replaced is displayed on the UI 94, informing the user or the like that the sensor 11 does not need to be replaced. If both the first significant difference test and the second significant difference test indicate that there is no significant difference, then a text indicating that malfunctioning of some part including the sensor 11 is doubted, for example, prompting the user or the like to deal with the situation. If both the first significant difference test and the second significant difference test indicate that there is a significant difference, then an error is displayed as the result of the diagnosis on the UI 94, for example.

- Determination condition setting screen -

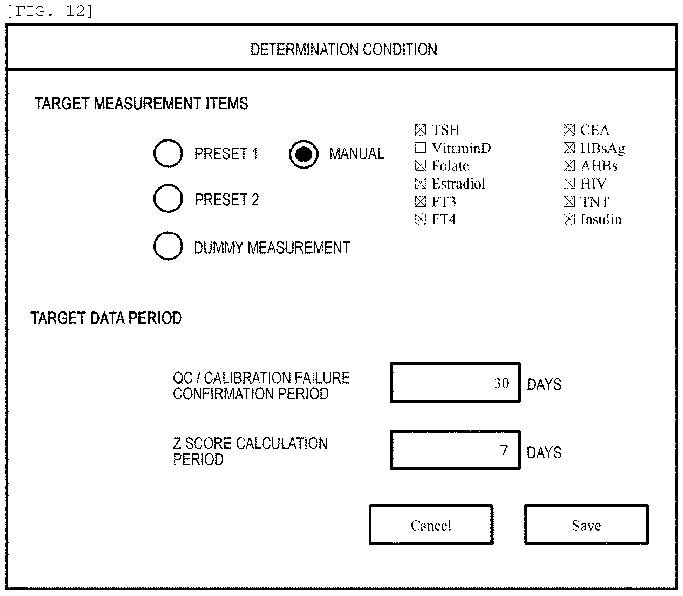

FIG. 12 is a diagram illustrating an example of a setting screen of a determination condition of a sensor for diagnosis. The setting screen illustrated in FIG. 12 is displayed on the UI 34 (FIG. 8) of the server 30. It is also possible to display the setting screen on the UI of a computer that can gain access to the server 31, such as the UI 94 of the control device 20 of the automatic analyzer 1. The example illustrated in FIG. 12 is by way of example only, and the other condition items than the illustrated items may be set. The setting screen illustrated in FIG. 12 may be shared by all automatic analyzers connected to the server 30 or may be prepared for each automatic analyzer ID.

The setting screen illustrated in FIG. 12 allows measurement items to be set in an upper area on the screen that is indicated by "TARGET MEASUREMENT ITEMS." The basic data group and the target data group referred to above are extracted from the data acquired by measuring measurement items set in that area. In FIG. 12, the illustrated screen is arranged to choose from among PRESET 1, PRESET 2, DUMMY MEASUREMENT, and MANUAL. When PRESET 1 is selected, for example, standard default measurement items are automatically set by the processing device 32. When PRESET 2 is selected, default measurement items for stricter determinations are automatically set by the processing device 32. When DUMMY MEASUREMENT is selected, the measurement of a dummy sample is automatically set by the processing device 32. Measurement items in PRESET 1 and PRESET 2 may be default items or may be set by the user. When MANUAL is selected, at least one measurement item may be set as desired by the user or the like from among given choices such as TSH and CEA.

Parameters regarding the extraction of a basic data group may be set in a lower area on the screen that is indicated by "TARGET DATA PERIOD." A period during which to create data for confirming whether QC and calibration have been successful or not can be specified by entering a numerical value into a field indicated as "QC/CALIBRATION FAILURE CONFIRMATION PERIOD." A period during which to create data used to calculate a Z score (ZscoreSTD, ZscoreJDG) can be specified by entering a numerical value into a field indicated as "ZSCORE CALCULATION PERIOD." The numerical values illustrated in FIG. 12 represent currently set values (or default values), and can be changed as desired to settings that can be saved.

- Advantages -

(1) According to the present embodiment, as described above, data for a reference period in which the past sensor 11 that was used in the automatic analyzer 1 is presumed as operating normally, during the period in which the past sensor 11 was used, are extracted as a basic data group, and the sensor 11 that is currently used in the automatic analyzer 1 is diagnosed by comparing its data with the basic data group. The sensor for diagnosis of the automatic analyzer 1 can thus be diagnosed highly accurately by comparing its data with the data representing that a normal state of a sensor is statistically presumed. In this manner, the automatic analyzer 1 is prevented from suffering downtime due to deterioration, failure, etc. of the sensor 11.

Furthermore, as the automatic analyzer 1 continues to operate, basic data groups are sequentially accumulated and updated, and the operation of the automatic analyzer 1 and changes in lots of consumables are reflected in the basic data groups. Therefore, the sensor 11 can be diagnosed while flexibly matching the conditions of the automatic analyzer 1 in operation.

(2) By setting the reference period so as to exclude a predetermined period prior to the replacement of the past sensor 11 (e.g., immediately prior to the replacement), the validity is secured for the data in the reference period as normal data. Even if the sensor is replaced for the reason of a deterioration or failure, the possibility that the sensor has operated normally during a sufficiently retrospective period prior to the date of replacement is high in view of the number of days spent from a doubted deterioration or failure to the replacement. The possibility is much higher if the sensor is replaced for the reason of periodic replacement. Consequently, by thus appropriately setting a predetermined period to be excluded from the reference period, data acquired by the sensor in a normal state can reasonably be extracted as a basic data group, so that it is possible to maintain a high level of diagnostic accuracy for sensors.

(3) By extracting a basic data group and a target data group from a plurality of measurement items, the number of data can be secured for suitable diagnosis for automatic analyzers where the number of measurements is small. Data acquired by the sensor 11 upon measurement may possibly have their values varying from measurement item to measurement item, and may possibly have their values varying to different degrees. In this regard, extracting a basic data group and a target data group from a plurality of measurement items to collect statistics thereof is effective to standardize the effect of varying data from measurement item to measurement item.

(4) By extracting a basic data group through filtering based on whether QC and calibration has been successful or not, the validity becomes much higher for a basic data group represented by data acquired from the sensor 11 in a normal state than a basic data group extracted under the condition of only setting a reference period. In this case, the reliability of the result of the diagnosis is further increased.

(5) Any one of a QC sample, a standard sample (calibration sample), and a dummy sample is measured under conditions that are the same as or close to those of a patient's sample. Accordingly, by using data of at least one type of measurement from among a patient's sample, a QC sample, a standard sample, and a dummy sample, the state of the sensor 11 can be diagnosed to a nicety.

QC samples and standard samples have merits in that they contain stable components and little impurities and have excellent steadiness. In particular, QC samples are meritorious in that they are of high measurement frequency and secure the number of data. The measurement of a patient's sample is also advantageous in that it can secure the number of data. Dummy measurement is suitable for monitoring the state of the sensor 11 over time under the same conditions because the same kinds of samples and reagents are used every time. The measurement of QC samples and standard samples that have excellent steadiness is also advantageous in monitoring the state of the sensor 11 over time.

(6) By using a significant difference test for the diagnosis of the sensor 11, the state of the sensor 11 can appropriately be diagnosed on the basis of data representing that a sensor is presumed as normal, even in an automatic analyzer 1 where it is difficult, for operational reasons, to collect data acquired by a sensor 11 in an abnormal state. According to the present embodiment, a one-sided t-test is employed as the significant difference test. However, another test such as a double-sided t-test or a x-square test may be employed.

(7) In addition to presuming the sensor 11 as being in an abnormal state, informing that the sensor 11 is presumed as being in a normal state is helpful for the user or the like to grasp the state of the automatic analyzer 1 and establish a maintenance plan therefor. By also informing that it is impossible to determine whether the sensor 11 abnormal or normal, the user or the like is prompted to deal with the situation flexibly.

(8) With some measurement items, measured values exhibit peculiar behaviors independent of the state of the sensor 11, possibly adversely affecting the diagnostic accuracy for the sensor 11. In view of such a problem, the UI allows the user to set measurement items as desired, thereby adjusting the diagnostic accuracy taking in account the effect of measurement items. Moreover, default measurement items are preset to reduce the trouble of setting measurement conditions.

(9) The times, lengths, etc. of periods during which to extract a basic data group and a target data group can be set as desired on the UI, allowing the user to adjust data extraction periods in view of the diagnostic results in the past, thereby to optimize the diagnostic accuracy for each automatic analyzer. Default values are available to reduce the trouble of setting measurement conditions.

4. Second embodiment

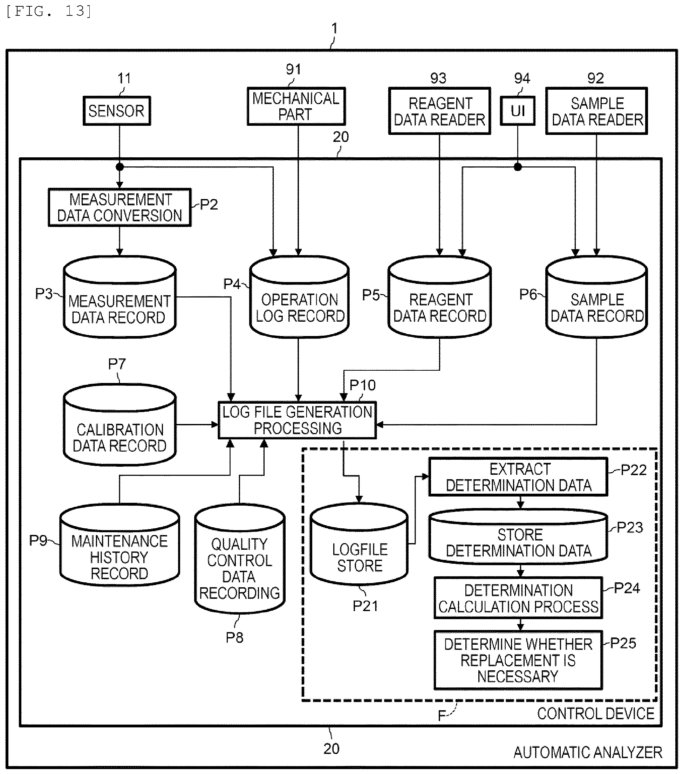

FIG. 13 is a block diagram illustrating a data processing flow in a diagnostic system according to a second embodiment of the present invention. Those parts in FIG. 13 that are identical to or correspond to those according to the first embodiment are denoted by identical reference characters in the above-described figures and will be omitted from detailed description.

The present embodiment is different from the first embodiment in that a diagnostic system for the sensor 11 is incorporated in the automatic analyzer 1. A processing sequence indicated in a diagnosing function section F illustrated in FIG. 13 represents the processing sequence relative to the diagnosing function carried out by the server 30 (see FIG. 8) according to the first embodiment. The data and the processing that are assigned to the memory 31 and the processing device 32 according to the first embodiment with respect to the diagnosing function are assigned to the memory 21 and the processing device 22 of the control device 20, for example, according to the present embodiment. A diagnostic algorithm for diagnosing the state of the sensor 11 is the same as that in the first embodiment, and the user or the like is informed about the result of the diagnosis via the UI 94.

Although not shown, the automatic analyzer 1 according to the present embodiment may be configured to be able to communicate with the server 30 and another automatic analyzer via the network NW. In that case, the data from a past sensor used in the other automatic analyzer may be added for the diagnosis of the sensor 11, as with the first embodiment. Furthermore, if the automatic analyzer 1 is of the stand-alone type, then it may be configured to diagnose the sensor 11 on the basis of its own data without additionally using the data acquired by the other automatic analyzer.

Other details of the present embodiment are the same as those of the first embodiment, and offer the same advantages as with the first embodiment.

Reference Signs List

1: automatic analyzer
11: sensor
21: memory
22: processing device
30: server (diagnostic system)
31: memory
32: processing device
34: user interface
94: user interface
F: diagnostic function unit (diagnostic system)
ZscoreSTD, ZscoreJDG: Z score (statistical value)

**Claims**

1. A diagnostic system for diagnosing a sensor that is provided in an automatic analyzer and outputs an analog electrical signal, the diagnostic system comprising:

   a memory that stores data of the electrical signal output by the sensor and a replacement history of the sensor; and
   a processing device that processes data recorded in the memory,
   wherein the processing device
   reads, from the memory, data for a set reference period from among electrical signal data output by a past sensor that was used in the automatic analyzer,
   calculates a statistical value of the data for a reference period,
   reads, from the memory, data recorded during a set evaluation period from among electrical signal data output by a sensor for diagnosis that is being used in the automatic analyzer,
   calculates a statistical value of the data for an evaluation period, and
   determines an abnormality of the sensor for diagnosis based on a difference obtained from the statistical value of the reference period and the statistical value of the evaluation period.

2. The diagnostic system according to claim 1,
   wherein the reference period is a period set by excluding a predetermined period before replacement of the past sensor.

3. The diagnostic system according to claim 1,
   wherein, based on a replacement history of the past sensor, the processing device calculates a time point that is a predetermined period back from the time of replacement of the past sensor, and specifies a set period ending at that time point as the reference period.

4. The diagnostic system according to claim 2,

wherein the processing device,
with respect to a reference sample that can be measured multiple times in the same lot prior to measurement of a patient's sample, records success or failure data of measurement of the reference sample in the memory each time the measurement is performed using the past sensor,
reads, from the memory, a history of the measurement of the reference sample performed during the predetermined period, and
sets the reference period for the past sensor when all measurements of the reference sample performed during the predetermined period are successful.

5. The diagnostic system according to claim 4,
wherein the reference sample is at least one of a quality control sample, a standard sample used for calibration, and a dummy sample.

6. The diagnostic system according to claim 1,

wherein the sensor of the automatic analyzer is used to measure a plurality of measurement items, and the processing device calculates the statistical value of the data for a reference period and the statistical value of the data for an evaluation period by statistically calculating all of a set number of data extracted for each of two or more selected measurement items.

7. The diagnostic system according to claim 1,
wherein the statistical value of the data for a reference period and the statistical value of the data for an evaluation period are at least one of, or a value based on at least one of, a mean value, a moving average value, a median value, and a standard deviation.

8. The diagnostic system according to claim 1,
wherein the processing device determines that the sensor for diagnosis has the abnormality when a difference between the data for an evaluation period and the data for a reference period is greater than a first determination value.

9. The diagnostic system according to claim 8,
wherein the processing device determines whether the difference between the data for an evaluation period and the data for a reference period is greater than the first determination value by a significance test based on the statistical value of the reference period and the statistical value of the evaluation period.

10. The diagnostic system according to claim 9,

wherein the processing device
calculates an average value and a standard deviation of the data for a reference period as the statistical value of the data for a reference period,
calculates, for each data for an evaluation period, a Z score by dividing a deviation from the average value by the standard deviation, and determines whether or not the sensor for diagnosis has the abnormality based on a comparison between an average value of the calculated Z scores and the first determination value.

11. The diagnostic system according to claim 8,
wherein, based on the statistical value of the reference period and the statistical value of the evaluation period, when the difference between the data for an evaluation period and the data for a reference period is smaller than a second determination value set to be smaller than the first determination value, the processing device determines that the sensor for diagnosis is normal.

12. The diagnostic system according to claim 8,
wherein, based on the statistical value of the reference period and the statistical value of the evaluation period, when the difference between the data for a reference period and the data for an evaluation period is equal to or less than the first determination value and equal to or greater than a second determination value set to be smaller than the first determination value, the processing device determines the sensor for diagnosis by taking into account factors of components other than the sensor for diagnosis.

13. The diagnostic system according to claim 1, comprising a user interface configured such that a determination condition of the sensor for diagnosis can be set.

**14.** The diagnostic system according to claim 6, comprising a user interface configured such that a determination condition of the sensor for diagnosis can be set,
wherein the user interface is configured such that at least one of the reference period and the measurement item can be set.

**15.** The diagnostic system according to claim 1,
wherein the sensor is a flow cell type.

**16.** The diagnostic system according to claim 1,
wherein the electrical signal is at least one of current, voltage and resistance.

**17.** An automatic analyzer which diagnoses the sensor comprising:

a sensor that outputs an analog electrical signal;
a memory that stores data of the electrical signal output by the sensor and a replacement history of the sensor; and
a processing device that processes data recorded in the memory,
wherein the processing device
reads, from the memory, data for a set reference period from among electrical signal data output by a sensor that was used in the past,
calculates a statistical value of the data for a reference period,
reads, from the memory, data recorded during a set evaluation period from among electrical signal data output by a sensor for diagnosis that is being used,
calculates a statistical value of the data for an evaluation period, and
determines an abnormality of the sensor for diagnosis based on a difference obtained from the statistical value of the reference period and the statistical value of the evaluation period.

**18.** A diagnostic method for diagnosing a sensor provided in an automatic analyzer, the method comprising:

calculating a statistical value of data for a set reference period from among electrical signal data output by a past sensor that was used in the automatic analyzer;
calculating a statistical value of data recorded during a set evaluation period from among electrical signal data output by a sensor for diagnosis that is being used in the automatic analyzer; and
determining an abnormality of the sensor for diagnosis based on a difference obtained from the statistical value of the reference period and the statistical value of the evaluation period.

[FIG. 1]

[FIG. 2]

[FIG. 3]

[FIG. 4]

[FIG. 5]

[FIG. 6]

[FIG. 7]

[FIG. 8]

1
AUTOMATIC ANALYZER

NW
NETWORK

33
COMMUNICATION I/F

P21
LOGFILE STORE

P22
EXTRACT DETERMINATION DATA

34
UI

P23
STORE DETERMINATION DATA

P24
CALCULATE DETERMINATION

P25
DETERMINE WHETHER REPLACEMENT IS NECESSARY

30

EP 4 361 640 A1

[FIG. 9]

```
              ( START )
                  │
                  │ S100
    ┌─────────────────────────────┐
    │   EXTRACT BASIC DATA GROUP   │
    └─────────────────────────────┘
                  │
                  │ S110
    ┌─────────────────────────────┐
    │      EXTRACT VALID VALUE     │
    └─────────────────────────────┘
                  │
                  │ S120
    ┌─────────────────────────────┐
    │   CALCULATE AVERAGE VALUE    │
    │    AND STANDARD DEVIATION    │
    └─────────────────────────────┘
                  │
                  │ S130
    ┌─────────────────────────────┐
    │      CALCULATE Z SCORE       │
    └─────────────────────────────┘
                  │
                  │ S140
    ┌─────────────────────────────┐
    │    DETERMINE GROUP OF DATA   │
    │       FOR DETERMINATION      │
    └─────────────────────────────┘
                  │
                  │ S150
    ┌─────────────────────────────┐
    │      CALCULATE Z SCORE       │
    └─────────────────────────────┘
                  │
                  │ S160
    ┌─────────────────────────────┐
    │     TEST FIRST SIGNIFICANT   │
    │          DIFFERENCE          │
    └─────────────────────────────┘
                  │
                  │ S170
    ┌─────────────────────────────┐
    │    TEST SECOND SIGNIFICANT   │
    │          DIFFERENCE          │
    └─────────────────────────────┘
                  │
                  │ 180
    ┌─────────────────────────────┐
    │      DETERMINE WHETHER       │
    │   REPLACEMENT IS NECESSARY   │
    └─────────────────────────────┘
                  │
                  │ S190
    ┌─────────────────────────────┐
    │  OUTPUT DETERMINATION RESULT │
    └─────────────────────────────┘
                  │
               ( END )
```

[FIG. 10]

```
              ┌──────────┐
              │  START   │
              └────┬─────┘
                   │           S101
     ┌─────────────▼─────────────┐
     │  EXTRACT DETERMINATION DATA │
     │ FOR 37 DAYS BEFORE REPLACEMENT │
     └─────────────┬─────────────┘
                   │           S102
     ┌─────────────▼─────────────┐
     │ CHECK QUALITY CONTROL RESULTS │
     │ FOR 30 DAYS BEFORE REPLACEMENT │
     └─────────────┬─────────────┘
                   │           S103
     ┌─────────────▼─────────────┐
     │  CHECK CALIBRATION RESULT  │
     │ FOR 30 DAYS BEFORE REPLACEMENT │
     └─────────────┬─────────────┘
                   │           S104
       ┌───────────▼───────────┐
       │ EXTRACT BASIC DATA GROUP │
       └───────────┬───────────┘
                   │
              ┌────▼─────┐
              │   END    │
              └──────────┘
```

[FIG. 11]

[FIG. 12]

| DETERMINATION CONDITION |
|---|

TARGET MEASUREMENT ITEMS

◯ PRESET 1     ⬤ MANUAL

◯ PRESET 2

◯ DUMMY MEASUREMENT

☒ TSH          ☒ CEA
☐ VitaminD     ☒ HBsAg
☒ Folate       ☒ AHBs
☒ Estradiol    ☒ HIV
☒ FT3          ☒ TNT
☒ FT4          ☒ Insulin

TARGET DATA PERIOD

QC / CALIBRATION FAILURE
CONFIRMATION PERIOD          | 30 | DAYS

Z SCORE CALCULATION
PERIOD                       | 7 | DAYS

| Cancel | | Save |

[FIG. 13]

## INTERNATIONAL SEARCH REPORT

International application No.

**PCT/JP2022/022531**

### A. CLASSIFICATION OF SUBJECT MATTER

*G01N 35/00*(2006.01)i
FI:  G01N35/00 F

According to International Patent Classification (IPC) or to both national classification and IPC

### B. FIELDS SEARCHED

Minimum documentation searched (classification system followed by classification symbols)

G01N35/00-G01N35/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2012-519280 A (ORTHO-CLINICAL DIAGNOSTICS, INC.) 23 August 2012 (2012-08-23) claims 1-10, paragraphs [0020]-[0072], fig. 1-17 | 1-9, 13-18 |
| Y | claims 1-10, paragraphs [0020]-[0072], fig. 1-17 | 10-12 |
| Y | JP 2008-52577 A (HITACHI HIGH-TECHNOLOGIES CORP.) 06 March 2008 (2008-03-06) paragraphs [0030]-[0033] | 10 |
| Y | JP 2008-89615 A (SYSMEX CORP.) 17 April 2008 (2008-04-17) claim 1, paragraph [0036] | 11-12 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 July 2022** | **09 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/022531**

| Patent document cited in search report | | | Publication date (day/month/year) | Patent family member(s) | Publication date (day/month/year) |
|---|---|---|---|---|---|
| JP | 2012-519280 | A | 23 August 2012 | WO 2010/099170 A1 claims 1-12, page 17, line 1 to page 39, line 7 | |
| JP | 2008-52577 | A | 06 March 2008 | (Family: none) | |
| JP | 2008-89615 | A | 17 April 2008 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019536049 A